# EUROPEAN PATENT APPLICATION

(11) **EP 4 752 855 A1**
(43) Date of publication of application: **03.06.2026**
(21) Application number: 24215898.8
(22) Date of filing: 27.11.2024
(51) Int. Cl.: G06V 20/56, G06V 20/68, A01D 41/127

(54) **METHOD FOR DETECTING COMPONENTS IN A CROP MIXTURE**

(71) Applicant: CNH Industrial Belgium N.V., 8210 Zedelgem (BE)
(72) Inventor: Vanlerberghe, Jasper, 8210 Zedelgem (BE); Verschaeve, Bertl, 8210 Zedelgem (BE); Leenknegt, Arno, 8210 Zedelgem (BE); Jongmans, Dré W.J., 8210 Zedelgem (BE); Van Campenhout, Simon, 8210 Zedelgem (BE)
(74) Representative: CNH Industrial IP Department

(57) **Abstract**

A computer-implemented method for detecting components in a crop flow of a harvesting machine, the method comprising: receiving a plurality of images of a first crop flow captured by a first image sensor; receiving a plurality of images of a second crop flow captured by a second image sensor, wherein the second image sensor is in a different location of the harvesting machine than the first image sensor; preparing a first training data set comprising the images of the first crop flow; fine-tuning a first machine learning model using the first training data set wherein fine-tuning comprises: identifying a first component in the first training data set; and identifying a first set of features associated with the first component; and applying the fine-tuned machine learning model to the images of the second crop flow to recognise the first component using the first set of features.

## Description

### TECHNICAL FIELD

The present invention relates to a system and method for detecting components in crop flows of agricultural harvesting machines. In particular, the present invention relates to the use of machine learning models in image analysis to improve the accuracy of component detection in the crop flows.

### BACKGROUND

Combine harvesters, also simply called combines, are complex driving agricultural machinery comprising a variety of mechanical tools for reaping grain crops from a field, feeding the reaped crop into the crop processing core of the combine, threshing the grain, and separating the threshed grain from the straw and other non-grain material. In most combine harvesters, a cleaning system is provided for separating the chaff from the grain kernels. The cleaned grain is then transported from the cleaning system to a grain tank wherein the grain is temporarily stored until the grain tank is unloaded into a trailer or at a grain storage facility.

The cleaning system typically comprises one or more sieves that are moved in a reciprocating manner while a fan blows air through the sieves from below. The light chaff is blown out to the rear of the machine while the heavier grain kernels fall through the sieve openings. The reciprocating movement, the sieve opening, and the fan speed are adjustable to optimise the cleaning operation such that grain losses are low while only minimal amounts of chaff end up in the grain tank. Grain kernels falling through any of the sieves are collected by a common clean grain auger that brings the clean grain to a grain elevator.

Various sensors may be used for monitoring the performance of the various crop processing units in the harvester. Such sensors may, e.g., include grain loss sensors or pressure sensors. Sometimes, a camera system is used to determine how much chaff or other non-grain material is contained in the grain that is transported from the sieves to the grain tank. The use of a camera system for capturing image of the harvested grain, downstream of the cleaning system has been described in, e.g., WO 2006/010761 A1. Such camera systems have since been used for measuring an amount of chaff and other non-grain material in the grain that is elevated towards the grain tank. The amount of non-grain material in the cleaned grain is a good measure for the performance of the cleaning system. The use of such camera systems allows an operator or an automated control system to adapt one or more operational settings of the cleaning system based on the measured cleaning system performance.

One problem with the use of camera systems and automated image recognition systems for analysing the images captured by such camera systems is that the same harvester may be used for harvesting a large variety of different crops. Grain kernels and other crop components of different crop varieties may differ significantly in features such as size, colour, and shape. Also, time and location dependent crop conditions may influence the appearance of different parts of the crop material. Traditional image recognition techniques may therefore not always be effective and Al based image recognition techniques may need to be trained separately for all different crop varieties. Since not every possible crop feature variation is present in the training data sets, the resulting models are not robust and do not perform uniformly at different locations, in different environmental conditions and at different time periods.

As a result of varying environmental conditions, locations and time periods, as well as the growth of new crop varieties, Al models used by AI based image recognition techniques need to be constantly retrained. This ongoing training is laborious and computationally intensive.

It is an aim of the present invention to address at least some of the disadvantages of the prior art.

### SUMMARY OF THE INVENTION

According to an aspect of the invention there is provided a computer-implemented method for detecting components in a crop flow of a harvesting machine. The method comprises steps of receiving a plurality of images of a first crop flow captured by a first image sensor, and receiving a plurality of images of a second crop flow captured by a second image sensor. The second image sensor is in a different location of the harvesting machine than the first image sensor. The method further comprises steps of preparing a first training data set comprising the images of the first crop flow, and fine-tuning a machine learning model using the first training data set. The fine-tuning involves identifying a first component in the images of the first training data set, and then identifying a first set of features associated with the first component. The fine-tuned machine learning model is then applied to the images of the second crop flow to recognise the first component using the first set of features.

With the method according to the invention, images captured by the first image sensor are advantageously used to quickly improve the image analysis performed on images captured by the second image sensor. For example, a camera system that is arranged to monitor the performance of the threshing and separation section of a combine harvester may be tasked with detecting grain kernels that are present in the straw mass at the end of the separation section. With no accurate prior knowledge of the expected colour and shape of such kernels, this may be a difficult task. According to the invention, images captured by another camera system arranged at, for example, the clean grain elevator can be used to quickly and reliably identify the characteristic features of the grain kernels. These identified characteristic features are then used by the first camera system to detect the otherwise difficult to find grain kernels in the straw mass. More generally, images from a first image sensor wherein the first component may be easy to spot and characterise are used to make it easier to identify the same first component in images from a second image sensor wherein the first component may hardly occur and is much more difficult to distinguish from the background.

In exemplary embodiments of the invention, a proportion of the first component in the second crop flow is determined based on the recognised first component in the images of the second crop flow. In many harvesters, it is important to know the proportions of various crop components in a crop mixture. In, for example, a combine harvester, the user would like to know how much, chaff, straw elements, insects, or other material other than grain (MOG) is present in the cleaned grain that is inside, or on its way to, the grain tank. Similarly, the user wants to know how much grain can still be found in the straw at the end of the separation section or in the straw chopper.

In preferred embodiments, the method further comprises steps of preparing a second training data set comprising the images of the second crop flow and further fine-tuning the machine learning model using the second training data set. Herein, the further fine-tuning comprises identifying a second component in the images of the second training data set, and identifying a second set of features associated with the second component. The further fine-tuned machine learning model is then applied to the images of the first crop flow to recognise the second component using the second set of features. So, while a first imaging system assists a second imaging system with detecting crop components that are easy to identify in the former, and less so in the latter, the second imaging system returns the favour by assisting the first imaging system in detecting another crop component. For example, a camera near a straw chopper can assist a camera in the clean grain elevator with detecting the occasional straw segment, while the camera in the clean grain elevator can assist the straw chopper camera with detecting grain kernels.

In another embodiment, the second training data set may be used to fine-tune a second machine learning model to identify the second component in the second training data set, and identify the second set of features associated with the second component. Subsequently, the fine-tuned second machine learning model is applied to the images of the first crop flow to recognise the second component using the second set of features. The first image sensor and the second image sensor may be located in various locations suitable for monitoring a crop flow in an agricultural harvester. Preferably, the two or more image sensors are located in positions where the composition of the observed crop flow is significantly different, such that the machine learning model optimally benefits from the crop feature information that can be extracted from the different images. For example, the image sensors are located adjacent at least one of a clean grain elevator of the harvester, a straw chopper of the harvester, a threshing section of the harvester, a separation section of the harvester, a feeder of the harvester and a rethresher of the harvester.

In an embodiment, the first image sensor may be located on a first harvesting machine and the second image sensor may be located on a second harvesting machine. This configuration enables information to be shared between different harvesting machines. Therefore, the machine learning model of the first harvesting machine benefits from the information received from the second harvesting machine, in addition to the information received from image sensors comprised on the first harvesting machine.

This is particularly advantageous for harvesting machines that are operated proximal to each other or in a similar environment. For example, if the first harvesting machine is operating in the same location as the second harvesting machine but at an earlier time of day, the second harvesting machine can benefit from the fine-tuned machine learning model of the first harvesting machine that has more accurate feature identification capabilities. Additionally, harvesting machines operated in the same field and in different locations of the field, will image crop flows with different proportions of crop components.

For example, if the first harvesting machine is operating in an area with a weed infestation, the fine-tuned machine-learning model will identify more accurate sets of features associated with weed seeds. These sets of features can then be used to identify weed seeds more accurately in crop flows of the second harvesting machine that may be operating in an area where weed seeds are present in lower proportions.

In an alternative embodiment, the first image sensor may be located on a first harvesting machine and the second image sensor may be located on a handheld device. This configuration is advantageous for imaging the environment where the harvesting machine will be operated prior to operating the harvesting machine. Additionally, this configuration is advantageous for imaging the product of a harvesting machine after the completion of a harvesting session.

In preferred embodiments, a proportion of the first component in the first crop flow is at least 50%. For optimal performance of the machine learning model, it is important to know with certainty that at least some of the first component is visible in the images. Preferably, the first component is abundantly present in the images, such that a plurality of instances of this first component can be analysed, and that the identified set of features associated with the first component is fully representative of both the average and the usually present deviation from the average that can be expected for said features.

When the proportion of the first component in the second crop flow is determined using the method according to the invention, an operating parameter of the harvesting machine may be adjusted in dependence of that determined proportion. Due to the improved accuracy of the component detection in the captured images, the control of the harvester is more responsive and more effective than with other component detection models.

Known and proven machine learning models may be applied for various embodiments of the method according to the invention. For example, the machine learning model may comprise a computer vision algorithm, an artificial neural network, a deep neural network, an autoencoder, a Siamese neural network, a zero-shot learning algorithm and/or a few-shot learning algorithm. The fine-tuning of the machine learning model may comprise offline supervised fine-tuning and/or online self-supervised fine-tuning.

Offline supervised fine-tuning comprises fine-tuning the machine learning model using historic data captured by the image sensors, wherein the data is labelled to identify at least a portion of the first component and/or the second component. Therefore, the machine learning model identifies more accurate sets of features associated with the first component and/or the second component. As a result, the accuracy of component detection in the crop flows is improved. The labelling is typically done by experienced users who are able to confidently and accurately identify the different components in the previously captured images. While this labelling may take place while harvesting and capturing images, it will typically be done offline after the completion of a harvesting session.

Online self-supervised fine-tuning improves the image analysis of the crop flows while the harvesting machine is in operation. The machine learning model is fine-tuned using real-time data captured by the first image sensor, wherein the machine learning algorithm itself finds implicit patterns in the data to identify the first component and the first set of features. The machine learning model may also be fine-tuned using real-time data captured by the second image sensor, wherein the model finds implicit patterns in the data to identify the second component and the second set of features. Online self-supervised fine-tuning therefore reduces the need for intensive data annotation by the user, as in offline supervised fine-tuning, and enables unseen data to be used for detecting components in the crop flows. This is particularly advantageous for crop varieties that are greatly influenced by their cultivated location and other environmental factors. Furthermore, this is advantageous for detecting components in the crop flow that may not be typically labelled in training data sets, such as insects and other MOG.

The act of fine-tuning the machine learning model is herein to be understood as a process of improving the performance of an existing machine learning model for the execution of a specific task in a specific context. In this case, the specific task is to detect specific components in images of a crop mixture and the specific context is images of a crop flow taken by image sensors of a harvesting machine. The fine-tuning does not attempt to change the underlying mechanics of the machine learning model, but may adapt its functional parameters, such as the weights and biases in a neural network, or may retrain the machine learning model after adding new training data that better reflects the context wherein the machine learning model is employed.

The components to be detected are not necessarily included in the original training data of the existing machine learning model. In an embodiment where a specific component was not included in the training data of the existing machine learning model, the machine learning model can identify the previously unseen component by receiving a second data input, wherein the second data input comprises an image or a semantic description of the unseen component. In such embodiment, the act of fine-tuning the machine learning model comprises using, at least in part, the second data input to identify the unseen component and the set of features associated with the unseen component. This may be done without changing the functional parameters of the machine learning model.

According to another aspect of the invention, a harvesting machine is provided comprising a first image sensor and a second image sensor. The first image sensor is configured to capture images of a first crop flow of the harvesting machine. The second image sensor is configured to capture images of a second crop flow of the harvesting machine, and is installed in a different location of the harvesting machine than the first image sensor. A controller of the harvesting machine is operatively coupled to the first image sensor and the second image sensor, and is configured to carry out the inventive methods described above. The harvesting machine may, for example, be a combine harvester, a forage harvester, an agricultural baler, a grape harvester, a cotton harvester or a sugarcane harvester.

### BRIEF DESCRIPTION OF THE DRAWINGS

Embodiments of the invention will now be described by way of example with reference to the accompanying drawings, in which:
Figure 1 schematically shows a combine harvester with an embodiment of the cleaning system according to the invention.
Figure 2 shows a block diagram comprising the essential components of the harvesting machine control system.
Figure 3 shows a block diagram of the functional components of the machine learning model.
Figure 4 shows a flow diagram of a method used to identify components in a crop flow.

### DETAILED DESCRIPTION

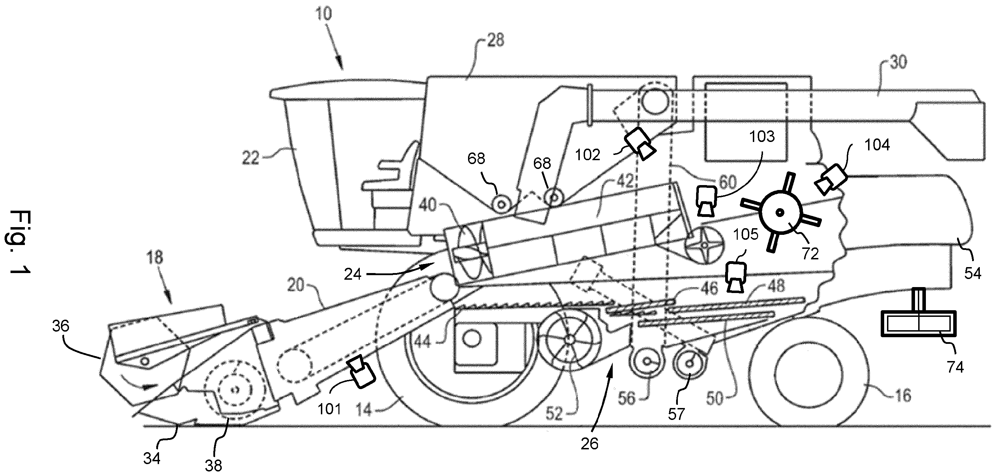

Figure 1 schematically shows an agricultural harvester in the form of a combine harvester 10. A combine harvester 10 as shown in Figure 1 generally includes front and rear ground engaging wheels 14, 16, a header 18, a feeder 20, an operator cabin 22, a threshing and separation system 24, a cleaning system 26, a grain tank 28 and an unloading tube 30.

The header 18 is mounted to the front of the combine harvester 10 and includes a cutter bar 34 for severing crops from a field during forward motion of the harvester 10. A single or multi-segment rotatable reel 36 feeds the crop into the header 18, and an intake auger 38 feeds the severed crop laterally from each side towards the feeder 20. The feeder 20 conveys the severed crop to the threshing and separation system 24.

The threshing and separation system 24 is of the axial-flow type and comprises a threshing rotor 40 at least partially located and rotatable within a threshing concave 42. The threshing concave may take the form of a perforated concave. Grain from the severed crop is threshed and separated from the material other than grain (MOG) by the action of the threshing rotor 40 within the threshing concave 42. Larger elements of MOG, such as stalks and leaves do not pass through the perforations in the threshing concave 42 and are discharged from the rear of the combine harvester 10.

The release of straw residue behind the combine harvester 10 may be done by dropping the straw in a swath on the field, for example to allow it being picked up by a baler machine later. Often, however, the straw residue is chopped into smaller pieces by a straw chopper 72 and spread over the field across the full width of the header 18 by a spreader system 74. The spreader system 74 typically comprises a left and a right rotary spreader, each spreading the chopped crop residue received from the straw chopper 72 laterally and away from the combine harvester 10. The chaff and other small MOG coming from the cleaning system 26 may be dropped on the field, spread over the field by a separate chaff spreader (not shown), or mixed in with the straw residue to be spread together therewith by the spreader system 74. The straw, chaff, and other MOG that is spread over the field serves as fertilizer for the soil.

Grain and smaller elements of MOG (small MOG henceforth), such as chaff, dust and straw are small enough to pass through the perforations in the threshing concave 42. Grain and small MOG that has successfully passed the threshing and separation system 24 falls onto a preparation pan 44 and is conveyed towards the cleaning system 26. The cleaning system comprises a series of sieves and a cleaning fan 52. The series of sieves includes a pre-cleaning sieve 46, an upper (or chaffer) sieve 48 and a lower (or shoe) sieve 50. The cleaning fan 52 generates an airflow through the sieves 46, 48, 50 that impinges on the grain and small MOG thereon. The small MOG is typically lighter than the grain and is therefore separated from the grain as it becomes airborne. The small MOG is subsequently discharged from the combine harvester 10 via a straw hood 54.

The preparation pan 44 and pre-cleaning sieve 46 oscillate in a fore-to-aft manner to transport the grain and small MOG to the upper surface of the upper sieve 48. The upper sieve 48 is arranged vertically above the lower sieve 50 and oscillates in a for-to-aft manner too, such that the grain and small MOG are spread across the two sieves 48, 50, while also permitting cleaned grain to pass through openings in the sieves 48, 50 under the action of gravity.

Cleaned grain falls to a clean grain auger 56 that is positioned below and in front of the lower sieve 50 and spans the width of the combine harvester 10. The clean grain auger 56 conveys the cleaned grain laterally to a vertical grain elevator 60, which is arranged to transport the cleaned grain to the grain tank 28. Once in the grain tank 28, grain tank augers 68 at the bottom of the grain tank convey the cleaned grain laterally within the grain tank 28 to an unloading tube 30 for discharge from the combine harvester 10.

According to an embodiment of the present disclosure, the combine harvester 10 further comprises at least two image sensors such as the cameras 101, 102, 103, 104, 105 shown in Figure 1, wherein the at least two image sensors are located at different positions. Preferably, the cameras 101, 102, 103, 104, 105, are located in positions where the composition of the crop flow is significantly different. For example, a camera 101 near the feeder 20 may be used to regulate the amount of crop intake and enable detection of weed seeds. A camera 102 adjacent to the clean grain elevator 60 can be used to assess the grain quality. Further, a camera 103 near the threshing concave 42 may be useful for determining the concave loss and straw quality. A camera 104 near the straw chopper 72, used to observe the chopped residue, may be used to assess the chop quality and inform changes to the settings of the straw chopper 72 such as the rotation speed. Placing a camera 105 near the cleaning system 26 may be used to monitor the loss of grain kernels in the cleaning system 26 as well as to detect weed seeds in the cleaned grain. The observations from the camera 105 near the cleaning system 26 may be used to inform decisions about the settings of the cleaning system 26 such as the speed of sieve oscillation. Additionally, a camera (not shown) may be positioned to observe the tailings coming from the rethresher 57. Images from such a camera may, for example, be used to detect weed seeds between the tailings.

Although Figure 1 shows the agricultural harvester in the form of a combine harvester 10, it should be understood that the present disclosure can also be embodied in other types of harvesting machines, such as a forage harvester, an agricultural baler, a grape harvester, a cotton harvester and a sugarcane harvester.

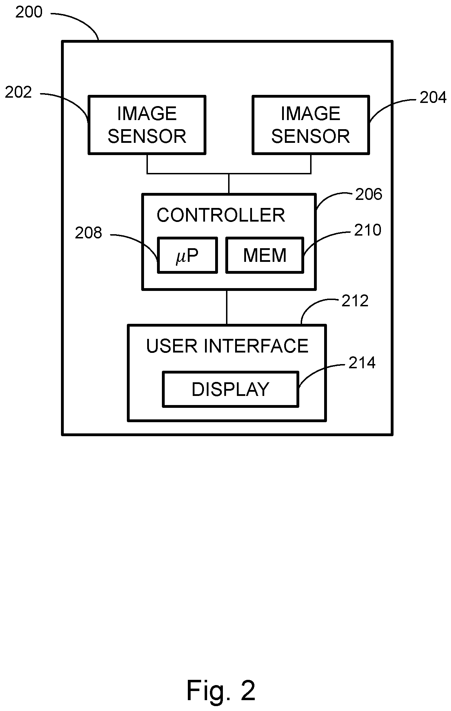

The combine harvester 10 comprises a harvesting machine control system 200 and the essential features of this system 200 according to an embodiment of the present disclosure are shown in Figure 2. The harvesting machine control system comprises at least two image sensors 202, 204, such as the cameras 101, 102, 103, 104, 105 shown in Figure 1, which are communicatively coupled to a controller 206. The controller 206 comprises at least one processor, such as the microprocessor 208 shown in Figure 2, and a memory 210. The processor 208 is configured to execute computer code or instructions stored in the memory 210 or received from other computer readable media (e.g. hard drive, network storage, a remote server, etc.).

In some embodiments, the memory 210 may include one or more devices (e.g., memory units, memory devices, storage devices, or other computer-readable media) for storing data and/or computer code for completing and/or facilitating the various processes described in the present disclosure. The memory 210 may include random access memory (RAM), read-only memory (ROM), hard drive storage, temporary storage, non-volatile memory, flash memory, optical memory, or any other suitable memory for storing software object and/or computer instructions. The memory 210 may be communicatively connected to the processor 208 via a processing circuit and may include computer code for executing (e.g. by the processor 208) one or more of the processes described herein.

In addition, the system 200 comprises a user interface 212 that may be configured to enable the user to provide input to the controller 206. The user interface 212 may be configured to enable the user to interact with data, such as labelling data sets as further described below. As such, the user interface 212 is communicatively coupled with the controller 206 to enable the user to interact with the processes run on the controller 206. In some embodiments, the user interface 212 may include a display 214 and one or more input devices, such as touchscreens, keypads, touchpads, buttons, switches and/or the like, which are configured to receive inputs from the user. In one embodiment, the user interface 212 may be positioned within the operator cabin 22 of the harvesting machine. However, in alternative embodiments the user interface 212 may be positioned at any other suitable location.

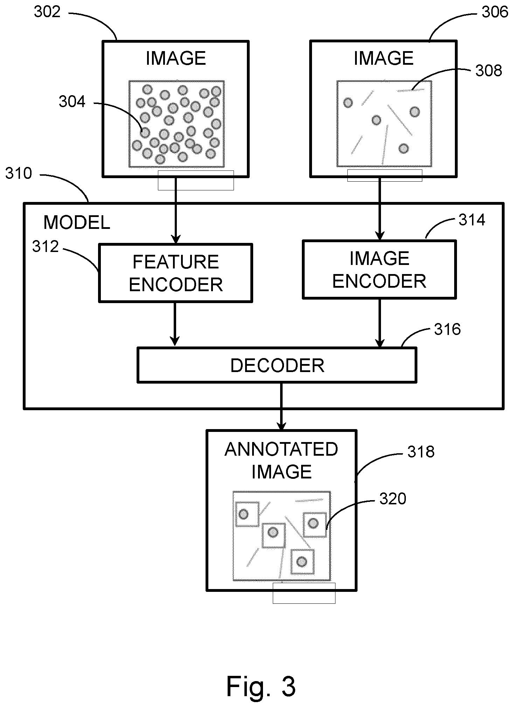

A block diagram of the machine learning model 310 implemented in the present disclosure is shown in Figure 3. The machine learning model 310 comprises various functional components including a feature encoder 312, an image encoder 314 and a decoder 316.

The machine learning model 310 comprises a machine learning algorithm that has been previously trained offline to discriminate between components, such as MOG and grain kernels. The machine learning model 310 may therefore comprise any of a computer vision algorithm, an artificial neural network, a deep neural network, an autoencoder, a Siamese neural network, a zero-shot learning algorithm and/or a few-shot learning algorithm.

In the offline training process of the machine learning algorithm, the feature encoder 312 is trained to identify and extract the features of the components and the decoder 316 is trained to detect the components in images based on the extracted features. The training of the feature encoder 312 and decoder 316 comprises offline supervised training using historic data that is labelled to identify at least a portion of the main components. The resultant machine learning model 310 is then implemented in a harvesting machine control system 200 and fine-tuned, as described below, to improve its accuracy.

The fine-tuning of the machine learning model may comprise offline supervised fine-tuning and/or online self-supervised fine-tuning. Offline supervised fine-tuning uses historic data captured by the image sensors 202, 204, wherein the data is labelled to identify at least a portion of each component. While this labelling may take place while harvesting and capturing images, it will typically be done offline after the completion of a harvesting session. The labelling is typically done by experienced users who are able to confidently and accurately identify the different components in the previously captured images.

In an example of such offline supervised fine-tuning, an image sensor 202 placed adjacent the clean grain elevator 60, such as the camera 102 shown in Figure 1, captures images 302 of grain kernels 304 such as those shown in Figure 3. The images 302 are labelled by a user to identify at least a portion of the grain kernels 304 and subsequently the images 302 are sent to the feature encoder 312. As a result, the feature encoder 312 is fine-tuned to identify a more accurate set of features associated with the grain kernels 304. Additionally, an image sensor 204 placed on the covers of the threshing concave 42, such as the camera 103 shown in Figure 1, captures images 306 of a mixture of grain kernels 304 and material other than grain (MOG) 308, such as straw and chaff. These images 306 are sent to the image encoder 314, which encodes the images 306 by compressing the images 306 into a latent space representation to capture the essential features of the images 306.

Subsequently, the decoder 316 receives the identified set of features associated with the grain kernels 304 from the feature encoder 312 and the encoded images from the image encoder 314. The decoder 316 is then fine-tuned to recognise the grain kernels 304 in the images 306 using the identified set of features received from the feature encoder 312. Subsequently, the decoder 316 may produce an annotated image 318 wherein the recognised components, in this case the grain kernels 304, are placed in bounding boxes 320. As a result, the accuracy of component detection and recognition in the crop flows is improved.

Online self-supervised fine-tuning improves the image analysis of the crop flows while the harvesting machine 10 is in operation. The machine learning model 310 is fine-tuned using real-time data captured by the first image sensor 202, wherein the machine learning algorithm itself finds implicit patterns in the data to identify a first component and an associated first set of features. The machine learning model 310 may also be fine-tuned using real-time data captured by the second image sensor 204, wherein the model finds implicit patterns in the data to identify the second component and the second set of features. Online self-supervised fine-tuning therefore reduces the need for intensive data annotation by the user, as in offline supervised fine-tuning, and enables unseen data to be used for detecting components in the crop flows. This is particularly advantageous for crop varieties that are greatly influenced by their cultivated location and other environmental factors. Furthermore, this is advantageous for detecting components in the crop flow that may not be typically labelled in training data sets, such as insects and other MOG.

Online self-supervised fine-tuning may take advantage of having prior knowledge of the most probable content of an image. For example, an image captured by the camera 102 adjacent the clean grain elevator 60 is expected to show primarily grain kernels, while an image captured by the camera 104 near the straw chopper 72 is expected to show primarily straw.

Online self-supervised fine-tuning comprises pattern recognition techniques such as feature clustering. For feature clustering techniques to successfully detect a component in a crop flow, the component must comprise at least 50% of the crop flow. In preferred embodiments, the crop flow comprises 100% of the component. A higher proportion of a first component in a crop flow leads to more accurate sets of features being identified. This results in more accurate component recognition by the decoder 316.

If a crop flow comprises less than 50% of a component, the identified set of features associated with this component may be filtered out using techniques such as unsupervised anomaly detection. Unsupervised anomaly detection may comprise feature clustering techniques, such as k-means clustering, or t-distributed stochastic neighbour embedding (t-SNE) and uses unlabelled data to detect anomalies or outliers in a data set. Therefore, components that are less than 50% present in the crop flow may be treated as outliers, and the machine learning model 310 can discard any identified sets of features associated with the outliers. This improves the accuracy of recognition, by the decoder 316, of other components in the crop flow that are present in higher proportions than the outliers.

In certain embodiments, more than one training data set may be prepared to fine-tune the machine learning model 310. For example, while a first training data set may be prepared to enable component identification in images 306 of a second crop flow as described above, a second training data set may be prepared that comprises images 306 of the second crop flow. The second training data set is then used to further fine-tune the machine learning model 310, wherein further fine-tuning comprises identifying a second component in the images of the second training data set, and identifying a second set of features associated with the second component. The further fine-tuned machine learning model is then applied to the images of the first crop flow to recognise the second component using the second set of features. Alternatively, the further fine-tuned machine learning model may be applied to images of another crop flow captured by any of the cameras 101, 102, 103, 104, 105 comprised in the harvesting machine 10. The machine learning model 310 can be fine-tuned using a plurality of training data sets in order to improve the accuracy of component recognition for a plurality of components.

In an embodiment, the first image sensor 202 may be located on a first harvesting machine 10 and the second image sensor 204 may be located on a second harvesting machine 10. This configuration enables information to be shared between harvesting machines 10. Therefore, the machine learning model 310 of the first harvesting machine 10 benefits from the information received from the second harvesting machine 10, in addition to the information received from image sensors 202, 204 comprised on the first harvesting machine 10.

This is particularly advantageous for harvesting machines that are operated proximal to each other or in a similar environment. For example, if the first harvesting machine is operating at an earlier time of day than the second harvesting machine, the second harvesting machine can benefit from the fine-tuned machine learning model of the first harvesting machine that has more accurate feature identification capabilities. Additionally, harvesting machines operated in the same field and in different locations of the field, will image crop flows with different proportions of crop components. For example, if the first harvesting machine is operating in an area with a weed infestation, the fine-tuned machine-learning model will identify more accurate sets of features associated with weed seeds. These sets of features can then be used to identify weed seeds more accurately in crop flows of the second harvesting machine that may be operating in an area where weed seeds are present in lower proportions.

Alternatively, the first image sensor may be located on a first harvesting machine and the second image sensor may be located on a handheld device. For example, the second image sensor may comprise a camera of a smartphone wherein the camera may be used to capture images of one or more crop flows. This configuration is advantageous for imaging the environment where the harvesting machine will be operated prior to operating the harvesting machine. Additionally, this configuration is advantageous for imaging the product of a harvesting machine after the completion of a harvesting session.

In addition to identifying a component in a crop flow, the proportion of the identified component may also be determined and an operating parameter of the harvesting machine 10 may then be adjusted in dependence of that determined proportion. The operating parameter may be adjusted by the controller 206 and due to the improved accuracy of the component detection in the captured images, the control of the harvesting machine 10 is more responsive and more effective than with other component detection models.

Although the present disclosure generally refers to a single machine learning model 310, it will be understood that the functional components of the model 310, as shown in Figure 3, may be comprised in separate machine learning models 310. For example, a first machine learning model 310 may comprise the feature encoder 312, whilst a second machine learning model 310 comprises the image encoder 314 and decoder 316.

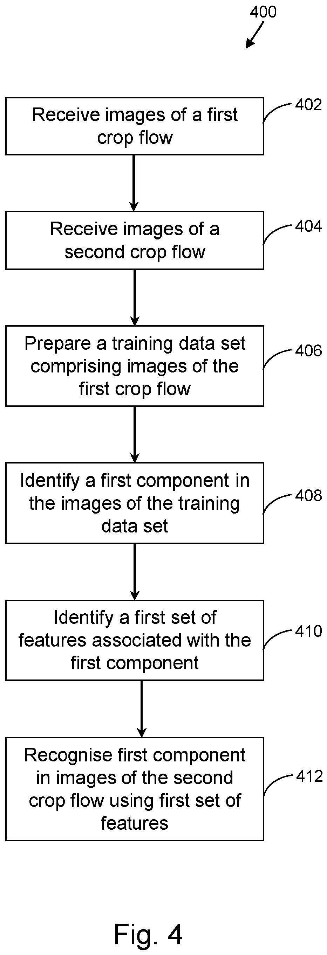

Referring now to Figure 4, a method 400 for detecting components in a crop flow of a harvesting machine is shown, according to an exemplary embodiment.

At Step 402, images of a first crop flow are received from a first image sensor of the harvesting machine and images of a second crop flow are received, at Step 404, from a second image sensor positioned in a different location of the harvesting machine than the first image sensor. As detailed above, this is advantageous for observing crop flow that is significantly different, such that the machine learning model optimally benefits from the crop feature information that can be extracted from the different images.

Steps 402 and 404 may occur simultaneously and the numbering of these steps does not necessarily reflect their respective order or sequence.

At Step 406, the images of the first crop flow are used to prepare a training data set that is sent to the machine learning model 310. The machine learning model identifies, at Step 408, a first component in the images of the training data set. At Step 410, a first set of features associated with the first component is identified.

At Step 412, the first component in the images of the second crop flow is recognised using the first set of features.

In an embodiment, the method 400 may be performed by the harvesting machine control system 200 and more specifically the controller 206.

In an embodiment, Steps 406 to 410 may be carried out by a first controller and Steps 410 and 412 may be carried out by a second controller. In certain embodiments, the first and second controllers may be comprised in the same harvesting machine. In other embodiments, the first and second controllers may be comprised in different harvesting machines. The first and second controllers may therefore comprise different machine learning models. For example, Steps 402 and 406 to 410 may be performed by a first machine learning model on the first controller, whilst Steps 404 and 412 may be performed by a second machine learning model on the second controller.

## Claims

1. A computer-implemented method (400) for detecting components in a crop flow of a harvesting machine (10), the method comprising:
receiving (402) a plurality of images (302, 306) of a first crop flow captured by a first image sensor (202);
receiving (404) a plurality of images (302, 306) of a second crop flow captured by a second image sensor (204), wherein the second image sensor (204) is in a different location of the harvesting machine (10) than the first image sensor (202);
preparing (406) a first training data set comprising the images of the first crop flow (302);
fine-tuning a first machine learning model (310) using the first training data set wherein fine-tuning comprises:
identifying (408) a first component in the first training data set; and
identifying (410) a first set of features associated with the first component;
and
applying the fine-tuned first machine learning model to the images of the second crop flow to recognise (412) the first component using the first set of features.

2. The method of claim 1, further comprising determining a proportion of the first component in the second crop flow based on the recognised first component in the images (302, 306) of the second crop flow.

3. The method of claim 1 or 2, further comprising:
preparing a second training data set comprising the images (302, 306) of the second crop flow;
further fine-tuning the first machine learning model (310) using the second training data set wherein further fine-tuning comprises:
identifying a second component in the second training data set; and
identifying a second set of features associated with the second component;
and
applying, the further fine-tuned first machine learning model to the images (302, 306) of the first crop flow to recognise the second component using the second set of features.

4. The method of claim 3 further comprising:
fine-tuning a second machine learning model (310); and
applying the fine-tuned second machine learning model to the images (302, 306) of the first crop flow to recognise the second component using the second set of features.

5. The method of claim 3 or 4, further comprising determining a proportion of the second component in the first crop flow based on the recognised second component in the images (302, 306) of the first crop flow.

6. The method of any preceding claim, wherein the first image sensor (202) or the second image sensor (204) is located adjacent at least one of:
a clean grain elevator (60) of the harvesting machine (10);
a straw chopper (72) of the harvesting machine (10);
a threshing section of the harvesting machine (10);
a separation section of the harvesting machine (10);
a feeder (20) of the harvesting machine (10); and
a rethresher (57) of the harvesting machine (10).

7. The method of any preceding claim, wherein: the first image sensor (202) is located in a first harvesting machine (10); and the second image sensor (204) is located in a second harvesting machine (10) or on a handheld device.

8. The method of any preceding claim, wherein the first component is grain kernels (304) or weed seed.

9. The method of claim 3, 4 or 5, wherein the second component is a material other than grain (308).

10. The method of any preceding claim, wherein a proportion of the first component in the first crop flow is at least 50%.

11. The method of claim 2 or any claim dependent on claim 2, wherein an operating parameter of the harvesting machine (10) is adjusted in dependence on the proportion of the first component in the second crop flow.

12. The method of any preceding claim, wherein the machine learning model (310) comprises a computer vision algorithm, an artificial neural network, a deep neural network, an autoencoder, a Siamese neural network, a zero-shot learning algorithm and/or a few-shot learning algorithm.

13. The method of any preceding claim, wherein fine-tuning comprises offline supervised fine-tuning or online self-supervised fine-tuning.

14. A harvesting machine (10) comprising:
a first image sensor (202) configured to capture images (302) of a first crop flow of the harvesting machine (10);
a second image sensor (204) configured to capture images (306) of a second crop flow of the harvesting machine (10), wherein the second image sensor (204) is in a different location of the harvesting machine (10) than the first image sensor (202); and
a controller (206) operatively coupled to the first image sensor (202) and the second image sensor (204), wherein the controller (206) is configured to carry out the method of any preceding claim.

15. A harvesting machine according to claim 14, wherein the harvesting machine (10) is a combine harvester, a grape harvester, a cotton harvester or a sugarcane harvester.
